(19) Europäisches Patentamt
European Patent Office
Office européen des brevets

(11) Veröffentlichungsnummer: **0 221 294**
**B1**

# (12) EUROPÄISCHE PATENTSCHRIFT

(45) Veröffentlichungstag der Patentschrift: **18.10.89**

(51) Int. Cl.⁴: **C10L 1/32**, B01F 17/00

(21) Anmeldenummer: **86112543.3**

(22) Anmeldetag: **10.09.86**

## (54) Verwendung von (Teil-)estern von Polycarbonsäuren als Viskositätserniedriger in wässrigen Kohleaufschlämmungen sowie wässrige Kohleaufschlämmungen.

(30) Priorität: **02.11.85 DE 3538984**
**07.11.85 DE 3539431**

(43) Veröffentlichungstag der Anmeldung:
**13.05.87 Patentblatt 87/20**

(45) Bekanntmachung des Hinweises auf die Patenterteilung:
**18.10.89 Patentblatt 89/42**

(84) Benannte Vertragsstaaten:
**BE DE FR GB IT NL SE**

(56) Entgegenhaltungen:
**EP-A- 0 032 289**
**EP-A- 0 108 302**
**DE-B- 1 141 601**

(73) Patentinhaber: **HÜLS AKTIENGESELLSCHAFT, Patentabteilung / PB 15 - Postfach 13 20, D-4370 Marl 1(DE)**

(72) Erfinder: **Riemer, Heinz, Dr., Fritz-Reuter-Strasse 15, D-4250 Bottrop(DE)**
Erfinder: **Friedrich, Werner, Tiroler Weg 14, D-4352 Herten(DE)**

EP 0 221 294 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft die Verwendung von Estern bzw. Teilestern aromatischer cycloaliphatischer und aliphatischer Polycarbonsäuren mit aryl-, alkyl- bzw. aralkyl-substituierten Phenolpolyglykolethern zur Herstellung von Kohle/Wasser-Suspensionen.

Aufschlämmungen von Kohle(staub) in Wasser sind wegen der leichten Handhabbarkeit bei Transport und Verbrennung/Vergasung für die Verwendung von Kohle als Energieträger bzw. als Chemierohstoff zunehmend interessant geworden.

Für einen Langstreckentransport bzw. für die Energiebilanz derartiger Suspensionen bei Verbrennungsprozessen ist es interessant, möglichst feststoffreiche, aber dennoch möglichst niedrigviskose und gegen Sedimentation und Scherbeanspruchung stabile Suspensionen herzustellen.

Zur Stabilisierung gegen vorzeitige Sedimentation werden i. a. Polymerisate und Polykondensate, wie Polysaccharide, Carboxymethylcellulose, Gummiarabicum bzw. Copolymere erfolgreich zugesetzt.

Es hat auch nicht an Bestrebungen gefehlt, durch Zusatz von Additiven die Viskosität bei gegebenem Wassergehalt zu reduzieren bzw. bei vorgegebener Viskosität den Feststoffanteil der Suspensionen zu erhöhen.

Unter den oberflächenaktiven Substanzen, die für diese Zwecke vorgeschlagen wurden, gibt es solche vom anionischen Typ:
(US-PS 4 282 006; US-PS 4 302 212; US-PS 4 330 301; US-PS 4 304 572; JP-PS 030963), vom nichtionischen Typ: (EP-PS 0 132 712-A; EP-PS 0 013 146-A; EP-PS 0 008 628; SE-PS 002 878; SE-PS 002 879; US-PS 4 276 054; EP-PS 0 0109 740-A; EP-PS 0 057 576) oder vom zwitterionischen Typ (WO-A 83/03618).

Häufig werden auch Mischungen der genannten Typen vorgeschlagen, z. B. EP-PS 0 057 576.

Abhängig von Art, Herkunft und Aufarbeitung der eingesetzten Kohlen sind die vorgeschlagenen Additive für Kohle/Wasser-Aufschlämmungen von unterschiedlicher Wirksamkeit bezüglich der Viskositätserniedrigung, der Stabilität gegen Sedimentation und gegen Scherbeanspruchung.

Ziel der vorliegenden Erfindung war es, ein Additiv zu finden, das bei Zusatz zu wäßrigen Kohleaufschlämmungen mit Feststoffgehalten von > 60 % Kohle eine möglichst starke Viskositätserniedrigung ermöglicht und dessen Wirksamkeit auch bei üblicher Scherbeanspruchung erhalten bleibt.

Es wurde nun gefunden, daß Derivate von substituierten Phenolpolyalkylenglykolethern der Formel

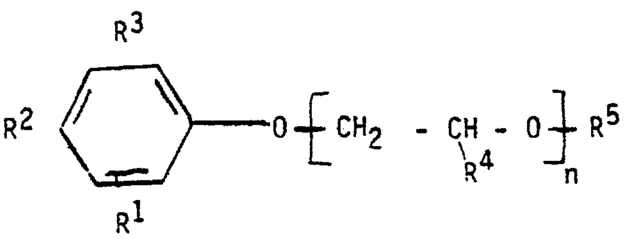

in welcher
$R^1$, $R^2$ und $R^3$ gleich oder verschieden sind und Wasserstoff, geradkettige oder verzweigte Alkylreste mit 1 bis 18 Kohlenstoffatomen im Alkylrest, (Alkyl)-phenylsubstituierte Alkylreste mit 1 bis 10 Kohlenstoffatomen in beiden Alkylresten oder eine (Alkyl)-Phenyl-, Naphthyl- oder -Anthracylgruppe mit 1 bis 18 Kohlenstoffatomen in der Alkylgruppe bedeuten,
n für einen Zahlenwertvon 30 bis 400 steht,
$R^4$ Wasserstoff, einen Methyl-, Ethyl- oder Propylrest bedeutet,
$R^5$ einen Rest der Form

$- \overset{O}{\overset{\|}{C}} - A - \overset{O}{\overset{\|}{C}} - O^- M^+$ bedeutet, worin

$-A-$ für $-CH = CH-$; $- \underset{SO_3^- M^+}{CH} - CH_2 -$ ; $- CH_2 - CH_2 -$;

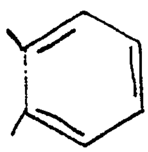 ; 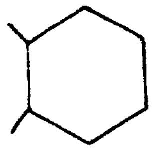 ; 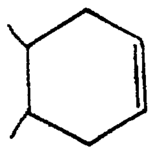 ; 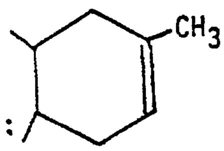 ; 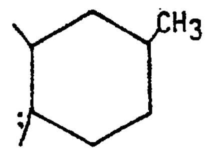 ;

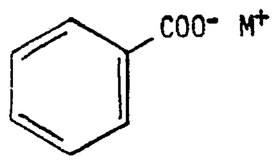 ; 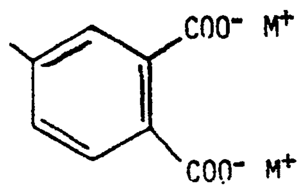 ; 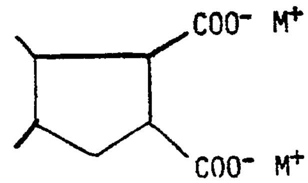 ;

bedeutet, in denen $M^+$ für ein Wasserstoffion, ein Metallion oder ein Ammoniumion oder auch ein Kation der Art $H^+NH_2R^6$ steht, worin $R^6$ einen gegebenenfalls substituierten Alkyl-, Cycloalkyl oder Arylrest bedeutet, vorteilhaft als Viskositätserniediger in wäßrigen Kohle-Aufschlämmungen eingesetzt werden können.

Wenn die Reste $R_1$, $R_2$ und $R_3$ erfindungsgemäß einen aromatischen Phenyl-, Naphthyl-, Anthrazylrest bedeuten, welche gegebenenfalls substituiert sein können, kommen als Substituenten geradkettige oder verzweigte Alkylreste mit 1 - 18, bevorzugt 1 - 12 C-Atomen, infrage.

Wenn $R^1$, $R^2$ oder $R^3$ für Alkylreste stehen, bedeutet Alkyl erfindungsgemäß einen geradkettigen oder verzweigten Kohlenwasserstoffrest mit 1 - 18, bevorzugt 8 - 16 Kohlenstoffatomen.

Beispielsweise kommen als Alkylrest, auch als Substituenten der o. a. Arylreste, infrage:
Methyl, Ethyl, Propyl, Isopropyl, Butyl, Isobutyl, Pentyl, Isopentyl, Hexyl, Isohexyl, Oktyl, Isooktyl, Nonyl, Isononyl, Dodecyl, Isododecyl, Stearyl, Isostearyl.

Bevorzugt sind Derivate von Phenol-polyalkylenglykolethern, für die gilt: die Anzahl der Kohlenstoffatome von $R^1 + R^2 + R^3$ muß 12 bis 30 sein, insbesondere solche, bei denen $R^1 = H$ und $R^2$ und $R^3$ Nonyl- bzw. Isononylreste sind. Wenn $R^1$, $R^2$, oder $R^3$ für arylsubstituierte Alkylreste stehen, sind Styryl- bzw. Alkylstyrylreste besonders bevorzugt.

Wenn $R^1$, $R^2$ und $R^3$ die Bedeutung von (Alkyl)-phenylsubstituierten Alkylresten haben, so kommen als Alkylreste infrage:
Methyl-, Ethyl-, Propyl-, Isopropy-, Butyl-, Isobutyl-, Pentyl-, Isopentyl-, Hexyl-, Isohexyl-, Octyl-, Isooctyl-, Nonyl-, Isononyl-, Decyl- und Isodecylrest.

Der Index n bestimmt die Länge der Polyalkylenglykolkette. Diese besteht im allgemeinen aus 30 - 400 Einheiten. Dabei kann infolge des Herstellungsverfahrens n im statistischen Mittel auch einen gebrochenen Wert annehmen. Bevorzugt hat n einen Wert von 30 - 250, insbesondere zwischen 50 - 120.

$R^4$ als Substituent der Polyalkylenglykolkette kann Wasserstoff oder einen Alkylrest mit 1 bis 3 Kohlenstoffatomen bedeuten, wobei innerhalb der Polyalkylenglykolkette die Reste $R^4$ eine verschiedene Bedeutung haben können und dabei statistisch oder in Blöcken verteilt sein können.

Gegenüber den in der DE-OS 32 40 309 beschriebenen Verbindungen zeigen die erfindungsgemäß einzusetzenden Teilester aromatischer Polycarbonsäuren der o. g. Phenolpolyalkylenglykolether neben der ausgeprägten viskositätsreduzierenden Wirkung in Kohle-Wasser-Aufschlämmungen als zusätzlichen Effekt eine deutliche Stabilisierung dieser Aufschlämmungen gegenüber Scherbeanspruchung.

Besonders bevorzugt werden folgende substituierten Phenolpolyalkylenglykolether für die anschließende Umsetzung mit den genannten Anhydriden eingesetzt:

Di-isooctyl-phenolpolyalkylenglykolether, Di-isononyl-phenolpolyalkylenglykolether, Dodecyl-phenol-polyalkylenglykolether, Hexadecylphenolpolyalkylenglykolether, Dioctyl-phenol-polyalkylenglykolether, Dinonyl-phenol-polyalkylenglykolether, Di-(phenylethyl)-phenol-polyalkylenglykolether, Tri-(phenylethyl)-phenolpolyalkylenglykolether sowie Gemische aus den genannten substituierten Phenolpolyalkylen-glykolethern; die Polyalkylenglykoletherketten können dabei aus Polyethylenoxiden, statistisch verteilten Polyethylenoxid-Polypropylen-Oxid-Copolymeren bzw. Polyethylenoxid-polypropylenoxid Blockcopolymeren bestehen.

Besonders bevorzugt als Veresterungskomponenten sind die Anhydride der Trimellithsäure, der Phthalsäure und der Pyromellithsäure, wobei letztere auch in Form der Diester der o. g. Alkyl- bzw. -Aralkylpolyalkylenglykolether besonders vorteilhaft eingesetzt werden kann.

Die erfindungsgemäßen Teilester der aufgeführten substituierten Phenolpolyalkylen-glykolether sind im allgemeinen wasserlöslich und werden vorzugsweise in Form einer neutral gestellten waßrigen Lösung verwendet.

Als Neutralisationsmittel kommen vorzugsweise NaOH oder Amine wie z. B. 1-Phenyl-1-aminobutan, 1-Phenylaminoethan bzw. 4-tert.-Butylcyclohexylamin in Frage.

Der Einsatz der erfindungsgemäßen Verbindungen erfolgt üblicherweise in wäßriger Lösung in Konzentrationen von 10 - 60 Gew. %: gegebenenfalls können auch Wasser-Alkohol-Mischungen verwendet werden. Für die Herstellung der Kohle-Wasser-Aufschlämmungen können diese Lösungen auf die Einsatzkonzentration verdünnt werden.

Prinzipiell ist es jedoch auch möglich, die Teilester in fester Form zuzusetzen und die Neutralisation bei der Herstellung der Kohle-Wasser-Aufschlämmung vorzunehmen. Da sich in einzelnen Fällen bei den erfindungsgemäß zu verwendenden Verbindungen mit Wasser nur schwerhandhabbare Additivkonzentrate herstellen lassen, kann es vorteilhaft sein, andere organische, wassermischbare Lösungsmittel - vor allem niedere aliphatische Alkohole - als Lösevermittler zuzusetzen.

Erfindungsgemäß ist unter Kohle mineralische und synthetische Kohle zu verstehen, beispielsweise Anthrazit, Koks, Braunkohle und insbesondere Steinkohle. Auch reiner Kohlenstoff in der Graphitmodifikation ist ierin einzuschließen.

Bevorzugt eingesetzt wird feingemahlene Kohle mit einer Teilchengröße von < 300 µm, insbesondere mit einer Korngrößenverteilung von 75 - 100 % < 100 µm.

Die erfindungsgemäßen wäßrigen Kohleaufschlämmungen enthalten die feingemahlene Kohle bzw. den Kohlenstaub in einer Menge von 30 - 85 bevorzugt 55 - 8 Gew.-%.

Die erfindungsgemäßen Kohle-Wasser-Aufschlämmungen enthalten die gegebenenfalls neutral gestellten Teilester der genannten substituierten Phenolpolyalkylen-glykolether in einer Menge von 0,1 bis 3 Gew.-%, bevorzugt von 0,3 - 1,5 %.

Bei der Herstellung der erfindungsmäßigen wäßrigen Kohleaufschlämmungen kann die Reihenfolge der Zugabe der einzelnen Komponenten variiert werden.

Die bevorzugte Herstellungsweise besteht darin, Kohlepulver der beschriebenen Korngrößenverteilung in eine Lösung des jeweiligen substituierten Phenolpolyalkylen-glykoletherderivats in Wasser einzurühren.

Es ist jedoch auch möglich, ein Gemisch von grobkörniger Kohle und der wäßrigen Lösung des jeweiligen substituierten Phenolpolyalkylenglykolethers einem Mahlprozeß zu unterwerfen, um eine Kohleaufschlämmung in dem gewünschten Korngrößenbereich zu erhalten.

Ferner kann in den erfindungsgemäßen wäßrigen Kohleaufschlämmungen ein Teil des Wassers durch andere Brennstoffe wie z. B. Methanol, Ethanol, i-Propanol usw. ersetzt werden.

Die erfindungsgemäßen wäßrigen Kohleaufschlämmungen zeigen im Vergleich zu den bekannten wäßrigen Kohleaufschlämmungen neben einem verbesserten Fließverhalten auch ein deutlich verbessertes Verhalten bei Scherbeanspruchung. Letzteres ist besonders bedeutsam für problematische Kohlesorten wie z. B. die beschriebene Kohle 2, bei der längere Scherbeanspruchungen, wie sie beim Pumpen bzw. Rühren von zunächst gut fließfähigen wäßrigen Kohleaufschlämmungen, die z. B. bestimmungsgemäß für den Einsatz in Heizkraftwerken transportiert oder gelagert werden, auftreten, zum "Zementieren" führen können.

Das Lagerverhalten der erfindungsgemäßen wäßrigen Kohleaufschlämmungen entspricht dem bekannten Erscheinungsbild der bisher beschriebenen wäßrigen Kohleaufschlämmungen.

Dies bedeutet, daß sich diese auch nach einer Lagerung leicht wieder in Bewegung bringen lassen und auch nach der Lagerung wieder pumpbar und rührbar sind.

Die Vorteile der erfindungsgemäßen wäßrigen Kohleaufschlämmungen gegenüber dem bisher bekannten Erscheinungsbild werden auch besonders deutlich, wenn man das für die Praxis bedeutsame Verhalten bei niedrigen Schergeschwindigkeiten vergleicht. Die in den Anwendungsbeispielen für niedrige Schergeschwindigkeiten ("Anfangsviskosität") angegebenen Werte sind ein Hinweis auf das z. B. nach einer längeren Lagerung bzw. bei geringen Transportgeschwindigkeiten in Rohrleitungen zu erwartende Fließverhalten.

<u>Herstellung der Teilester der substituierten Phenol-polyalkylen-glykolether</u>

<u>Beispiel 1</u>

351 g großtechnisch hergestellten Di-isononyl-phenols (98 %ig) werden mit 3 g NaOH als Katalysator im mit $N_2$ belüfteten Autoklaven auf 130 °C aufgeheizt. Nach Ausblasen des bei der Phenolatbildung entstandenen Wassers werden bei 130 - 170 °C 3 634 g Ethylenoxid zudosiert.
Das Reaktionsprodukt ist wasserlöslich und schmilzt bei 51 - 53 °C. Der Ethoxylierungsgrad n beträgt 80.

Beispiel 2

94 g Phenol werden bei Anwesenheit von 1 g p-Toluolsulfonsäure mit 208 g Styrol und unter langsamer Temperaturanhebung von 130 °C auf 160 °C umgesetzt. Man hält die Temperatur ca. 1 h auf 150 °C - 160 °C. Nach Abkühlen auf 120 °C setzt man 3 g gepulvertes KOH zu und erhitzt auf 130 - 160 °C unter Durchleiten von Stickstoff. In den mit $N_2$ belüfteten Reaktionsraum dosiert man bei 130 - 160 °C 3 520 g Ethylenoxid zu. Das Reaktionsprodukt ist wasserlöslich und schmilzt bei 48 - 50 °C. Der Ethoxylierungsgrad beträgt 80.

Beispiel 3

94 g Phenol werden bei Anwesenheit von 1 g p-Toluolsulfonsäure mit 318 g Methylstyrol unter langsamer Temperaturanhebung von 130 °C auf 160 °C umgesetzt. Man hält die Temperatur ca. 1 h auf 150 °C - 160 °C. Nach Abkühlen auf 120 °C setzt man 3 g gepulvertes KOH zu und erhitzt auf 130 - 160 °C unter Durchleiten von Stickstoff. In den mit $N_2$ belüfteten Reaktionsraum dosiert man bei 130 - 160 °C 4 400 g Ethylenoxid zu. Das Reaktionsprodukt ist wasserlöslich und schmilzt bei 57 - 58 °C.

Beispiel 4

258 g Isododecylphenol werden mit 3 g NaOH als Katalysator im mit $N_2$ belüfteten Autoklaven auf 130 - 170 °C aufgeheizt. Nach Ausblasen des bei der Phenolatbildung entstandenen Wassers werden bei 130 - 170 °C 3 520 g Ethylenoxid zudosiert. Das Reaktionsprodukt ist wasserlöslich und schmilzt bei 55 - 57 °C.

Beispiel 5

386,6 g des Dialkylphenolpolyalkylenglykolethers nach Beispiel 1 werden in einem Rührgefäß unter $N_2$-Abdeckung beginnend bei 80 °C portionsweise mit 19,2 g Trimellitsäureanhydrid umgesetzt. Die portionsweise Zugabe des Anhydrids erfolgt derart, daß die anfängliche Temperatur von 80 °C auf höchstens 100 °C ansteigt. Nach Zusatz der berechneten Menge des Anhydrids wird der Inhalt des Reaktionsgefäßes noch ca. 2 h bei 80 °C gehalten.
Nach dem Abkühlen erhält man ein in Wasser lösliches Produkt mit einem Schmelzbereich von 44 - 46 °C.

Beispiel 6

386,6 g des Dialkylphenolpolyalkylenglykolethers nach Beispiel 1 werden unter den in Beispiel 5 angegebenen Bedingungen mit 15,4 g Hexahydrophthalsäureanhydrid umgesetzt.
Man erhaält ein Produkt mit einem Schmelzbereich von 44 - 46 °C, das in Wasser löslich ist.

Beispiel 7

386,6 g des Dialkylphenolpolyalkylenglykolethers nach Beispiel 1 werden unter den in Beispiel 5 angegebenen Bedingungen mit 14,8 g Phthalsäureanhydrid (PSA) umgesetzt.
Man erhält ein in Wasser lösliches Produkt mit einem Schmelzbereich von 48 - 50 °C.

Beispiel 8

386,6 g des Dialkylphenolpolyalkylenglykolethers nach Beispiel 1 werden unter den in Beispiel 5 angegebenen Bedingungen mit 21,8 g Pyromellithsäureanhydrid (PMDA) umgesetzt.
Man erhält ein in Wasser lösliches Produkt mit einem Schmelzbereich von 37 - 40 °C.

Beispiel 9

773,2 g des Dialkylphenolpolyalkylenglykolethers nach Beispiel 1 werden unter den in Beispiel 5 angegebenen Bedingungen mit 21,8 g PMDA umgesetzt.
Man erhält ein in Wasser lösliches Produkt mit einem Schmelzbereich von 43 - 46 °C.

Beispiel 10

382,2 g des Aralkylphenolpolyalkylenglykolethers nach Beispiel 2 werden mit 19,2 g Trimellithsäureanhydrid unter den in Beispiel 5 angegebenen Bedingungen umgesetzt.

Man erhält ein in Wasser lösliches Produkt mit einem Schmelzbereich von 47 - 49 °C.

Beispiel 11

386,6 g des Dialkylphenolpolyalkylenglykolethers nach Beispiel 1 werden unter den in Beispiel 5 angegebenen Bedingungen mit 9,8 g Maleinsäureanhydrid (MSA) umgesetzt.
Man erhält ein Produkt mit einem Schmelzbereich von 46 - 48 °C, das in Wasser löslich ist.

Beispiel 12

Zu 396,4 g des in Beispiel 11 beschriebenen Umsetzungsproduktes werden bei ca. 55 °C 42,2 g einer mit NaOH auf pH = 9,7 eingestellten ca. 25 %igen wäßrigen Natrimbesulfitlösung und 380 g Wasser, die vorher auf ca. 50 °C erwärmt wurden, unter kräftigem Rühren rasch zugegeben. Bei 55 °C wird 1,5 h nachgerührt.
Nach Abkühlen des Reaktionsproduktes auf Raumtemperatur wird der Überschuß an Natriumbesulfit jodometrisch bestimmt und durch Zusatz äquimolarer mengen $H_2O_2$ in Natriumsulfat überführt. Der pH-Wert des sauren Endproduktes wird mit 50 %iger NaOH auf pH = 5-6 eingestellt.

Anwendungsbeispiele

Die nachfolgend beschriebenen Untersuchungen wurden mit folgenden Kohlen durchgeführt:

| Kohle 1 (Angaben bezogen auf wasserfreie Kohle): | |
|---|---|
| Asche | 7,3 Gew.-% |
| Flüchtige Bestandt. | 32,7 Gew.-% |
| Schwefel | 1,14 Gew.-% |
| Kohlenstoff | 80,1 Gew.-% |
| Wasserstoff | 4,92 Gew.-% |
| Stickstoff | 1,56 Gew.-% |
| Sauerstoff (errechn.) | 5,0 Gew.-% |

| Aschezusammensetzung: | |
|---|---|
| $SiO_2$: | 40,9 Gew.-% |
| $Al_2O_3$: | 26,4 Gew.-% |
| $Fe_2O_3$: | 11,4 Gew.-% |
| $TiO_2$: | 1,0 Gew.-% |
| CaO: | 6,6 Gew.-% |
| MgO: | 3,3 Gew.-% |
| $Na_2O$: | 1,4 Gew.-% |
| $K_2O$: | 3,0 Gew.-% |
| $SO_3$: | 5,7 Gew.-% |
| $P_2O_5$: | 0,6 Gew.-% |

| Korngrößenbestimmung: | |
|---|---|
| <150 µm | 100% |
| <106 µm | 99,2% |
| <75 µm | 97,5% |
| <53 µm | 90,0% |
| <38 µm | 76,9% |
| <27 µm | 60,0% |
| <19 µm | 45,8% |
| <13 µm | 35,1% |
| <9,4 µm | 23,7% |
| <6,6 µm | 14,4% |
| <4,7 µm | 7,5% |

| Kohle 2 | |
|---|---|
| Asche | 10,17 Gew.-% |
| Flücht. Bestandt. | 37,20 Gew.-% |
| Schwefel | 0,37 Gew.-% |
| Kohlenstoff | 64,8 Gew.-% |
| Wasserstoff | 4,92 Gew.-% |
| Stickstoff | 2,2 Gew.-% |
| Sauerstoff (errechn.) | 14,6 Gew.-% |

Aschezusammensetzung:

| | |
|---|---|
| $SiO_2$: | 52,42 Gew.-% |
| $Al_2O_3$: | 21,98 Gew.-% |
| $Fe_2O_3$: | 9,96 Gew.-% |
| $TiO_2$: | 0,80 Gew.-% |
| CaO: | 3,55 Gew.-% |
| MgO: | 2,35 Gew.-% |
| $Na_2O$: | 0,46 Gew.-% |
| $K_2O$: | 2,41 Gew.-% |
| S: | 1,36 Gew.-% |
| P: | 0,14 Gew.-% |

| Korngrößenbestimmung: | |
|---|---|
| <212 µm | 100% |
| <150 µm | 92% |
| <106 µm | 82,4% |
| <75 µm | 70,9% |
| <53 µm | 56,1% |
| <38 µm | 44,2% |
| <27 µm | 34,8% |
| <19 µm | 25,0% |
| <13 µm | 17,3% |
| <9,4 µm | 11,7% |
| <6,6 µm | 7,1% |
| <4,7 µm | 3,4% |

| Kohle 3 (Angaben bezogen auf wasserfreie Kohle) | |
|---|---|
| Asche | 10,3 Gew.-% |
| Flücht. Bestandt. | 32,3 Gew.-% |
| Schwefel | 0,58 Gew.-% |
| Kohlenstoff | 72,3 Gew.-% |
| Wasserstoff | 4,5 Gew.-% |
| Stickstoff | 1,9 Gew.-% |
| Sauerstoff (errechn.) | 11,2 Gew.-% |

Aschezusammensetzung:

| | |
|---|---|
| $SiO_2$: | 34,27 Gew.-% |
| $Al_2O_3$: | 28,38 Gew.-% |
| $Fe_2O_3$: | 9,84 Gew.-% |
| $TiO_2$: | 1,42 Gew.-% |
| CaO: | 10,51 Gew.-% |
| MgO: | 2,56 Gew.-% |
| $Na_2O$: | 0,36 Gew.-% |
| $K_2O$: | 0,40 Gew.-% |
| S: | 5,53 Gew.-% |
| P: | 0,23 Gew.-% |

| Korngrößenbestimmung: | |
|---|---|
| <212 µm | 100% |
| <150 µm | 97,1% |
| <106 µm | 94,1% |
| <75 µm | 91,2% |
| <53 µm | 80,3% |
| <38 µm | 69,7% |
| <27 µm | 56,6% |
| <19 µm | 44,7% |
| <13 µm | 36,7% |
| <9,4 µm | 26,8% |
| <6,6 µm | 17,3% |
| <4,7 µm | 9,2 % |

Beispiel 13

Herstellung und Prüfung der wäßrigen Kohleaufschlämmung

Wenn nicht anders angegeben, wurden die in den folgenden Beispielen beschriebenen Kohleaufschlämmungen nachfolgendem Verfahren hergestellt:

5,0 g einer mit NaOH auf pH = 7,0 eingestellten 50 %igen Lösung (Lösemittel: 20 Gew. % Isopropanol/80 % Wasser) des Teilesters (Additiv) nach Beispiel 5 und 0,15 g eines handelsüblichen Entschäumers (25 %ige wäßrige Silikonölemulsion, Type SE 57 der Firma Wacker) werden zu 127,52 g Trinkwasser (13 °dH) gegeben. Unter Rühren (Laborrührer mit gegenläufigem Doppelrührwerk) werden 367,22 g der o. g. feingemahlenen Kohle 2 entsprechend 350 g trockene Kohle 2 zugegeben. Das Rührwerk wird insgesamt 5 Minuten in Betrieb gelassen.

Es entsteht eine wäßrige Kohleaufschlämmung, deren Viskosität bei 20 °C mit dem Viskosimeter der Firma Brookfield (Modelltyp LVT) mit der Spindel Nr. 3 bei zwei verschiedenen Schalterstellungen (6 bzw. 60 Umdrehungen/Minute) entsprechend verschiedenen Schergeschwindigkeiten gemessen wird.

Infolge des Nicht-Newton'schen Fließverhaltens der wäßrigen Kohleaufschlämmungen stellen sich konstante Werte bei den jeweiligen Umdrehungsgeschwindigkeiten der Meßspindel erst nach einiger Zeit ein.

Da es für die Praxis von Bedeutung ist, z. B. Kenntnis über die Anfangsviskosität einer in Ruhe befindlichen wäßrigen Kohleaufschlämmung zu haben, wurde bei der Umdrehungsgeschwindigkeit von 6 U/Minuten der erste ablesbare Viskositatswert ("Anfangsviskosität") zur Charakterisierung der Wirksamkeit der erfindungsmäßigen Additive herangezogen. Für den bei 60 U/Minute gemessenen Viskositätswert ("Endviskosität") wurde jeweils der Viskositätswert nach Einstellung eines konstanten Wertes bei verschiedenen Ablesungen zur Beurteilung der Wirksamkeit der erfindungsmaßigen Additive herangezogen.

Für die oben beschriebene wäßrige Kohleaufschlämmung werden gefunden:
Brookfield LVT, Meßspindel 3, Messung bei 20 °C.

| Anfangsviskosität (6 U/Minute) | Endviskosität (60 U/Minute) |
|---|---|
| 1800 mPa · s | 940 mPa · s |

Außer von der Art und der Korngrößenverteilung hängen die bei konstanter Temperatur gemessenen Viskositätswerte wäßriger Kohleaufschlämmungen definierter Feststoffkonzentration wesentlich von der Art des zugesetzten Entschäumers sowie von der Aufbereitung (Rührgerät, Rührgeschwindigkeit, Rührzeit) und dem verwendeten Viskosimeter bzw. dem jeweiligen Meßsystem ab.

So wurden z. B. mit der oben beschriebenen wäßrigen Kohleaufschlämmung bei Herstellung in der Planetenkugelmühle (Typ Pulverisette 5 der Firma Fritsch GmbH, Idar-Oberstein) nach 1 Minute Mischzeit (bei 320 U/Minute) folgende Werte erhalten:
Viskosimeter: Brookfield LVT, Meßspindel 3, Messung bei 20 °C

| Anfangsviskosität (6 U/Minute) | Endviskosität (60 U/Minute) |
|---|---|
| 1200 mPa · s | 820 mPa · s |

Die in der Planetenkugelmühle aufbereitete Kohleaufschlämmung oben beschriebener Zusammensetzung ergab z. B. bei 20 °C mit einem Haake-Viskosimeter (Meßkörper MV II P St) folgende Viskositatswerte:

| Schergeschwindigkeit ($D = 50\ S^{-1}$) | Schergeschwindigkeit ($D = 225\ S^{-1}$) |
|---|---|
| 880 mPa · s | 530 mPa · s |

Aus Gründen der Vergleichbarkeit der Wirkung verschiedener Additive werden in den nachfolgenden Beispielen jeweils die Meßergebnisse mit dem Brookfield Viskosimeter herangezogen. Für die Herstellung der Kohleaufschlämmung wurde auch das Aufbereitungsverfahren (5 minütiges Rühren mit dem Laborrührer) standardisiert. Auch Art und Konzentration (bezogen auf trockenen Kohlestaub) des Entschäumers wurden konstant gehalten.

Beispiel 14

Wirksamkeit verschiedener erfindungsgemäßer Additive:

Zu einer wäßrigen Lösung, die das jeweilige nachfolgend bezeichnete Additiv in einer Konzentration von 0,5 Gew.-% (bezogen auf trockenen, feingemahlenen Kohlenstaub und 0,043 Gew,-% Entschäumer (bezogen auf trockenen Kohlenstaub) enthält, wird trockener, feingemahlener Kohlenstaub der Kohle 2 nach dem in Beispiel 13 beschriebenen Verfahren eingerührt.
Die Kohlenstaubmenge wird so bemessen, daß der Gehalt der resultierenden wäßrigen Kohleaufschlämmung bezogen auf wasserfreie Kohle 65 Gew.-% beträgt.

Mit dem Brookfield-Viskosimeter Typ LVT werden mit der Meßspindel 3 bei 20 °C folgende Viskositätswerte nach dem in Beispiel 13 beschriebenen Verfahren ermittelt:

a) Additiv aus Beispiel 4, auf pH = 7 eingestellt mit NaOH

| Anfangsviskosität | Endviskosität |
|---|---|
| 1300 mPa · s | 600 mPa · s |

b) Additiv aus Beispiel 5, auf pH = 7 eingestellt mit NaOH

| Anfangsviskosität | Endviskosität |
|---|---|
| 600 mPa · s | 440 mPa · s |

c) Additiv aus Beispiel 6, auf pH = 7 eingestellt mit NaOH

| Anfangsviskosität | Endviskosität |
|---|---|
| 2300 mPa · s | 1000 mPa · s |

d) Additiv aus Beispiel 7, auf pH = 7 eingestellt mit NaOH

| Anfangsviskosität | Endviskosität |
|---|---|
| 1000 mPa · s | 610 mPa · s |

e) Additiv aus Beispiel 9, auf pH = 7 eingestellt mit NaOH

| Anfangsviskosität | Endviskosität |
|---|---|
| 1100 mPa · s | 690 mPa · s |

f) Additiv aus Beispiel 10, auf pH = 7 eingestellt mit NaOH

| Anfangsviskosität | Endviskosität |
|---|---|
| 2800 mPa · s | 1180 mPa · s |

g) Additiv aus Beispiel 11, auf pH = 7 eingestellt mit NaOH

| Anfangsviskosität | Endviskosität |
|---|---|
| 1600 mPa · s | 700 mPa · s |

h) Additiv aus Beispiel 12,

| Anfangsviskosität | Endviskosität |
|---|---|
| 3050 mPa · s | 1300 mPa · s |

Vergleichsbeispiel 1

Gemäß DE-OS 32 40 309 A 1 wurde als Additiv ein Aralkylpolyalkylenglykolether nach Beispiel 2 in der oben beschriebenen Weise (Beispiele 14 a - h) in 0,5 %iger Konzentration bezogen auf trockenen Kohlenstaub der Kohle 2 eingesetzt. Eine wäßrige Kohleaufschlämmung mit einem Gehalt von 65 Gew.-% Kohlenstaub (bezogen auf trockene Kohle 2) wies folgende Viskositatswerte auf:

| Anfangsviskosität | Endviskosität |
|---|---|
| >20000 mPa · s | >2000 mPa · s |

Vergleichsbeispiel 2

Gemäß DE-OS 32 40 309 A I wurde als Additiv ein Aralkylpolyalkylenglykolether-Umsetzungsprodukt nach dortigem Beispiel 6 in der oben beschriebenen Weise (Vergleichsbeispiel 1) eingesetzt. An einer (bezogen auf trockenen Kohlenstaub der Kohle 2) 65 %igen wäßrigen Kohleaufschlämmung wurden folgende Viskositätswerte ermittelt:

| Anfangsviskosität | Endviskosität |
|---|---|
| 5400 mPa · s | 1360 mPa · s |

Vergleichsbeispiel 3

Gemäß DE-AS 11 41 601 wurde als Additiv ein Nonylphenolpolyethylenglykolether mit einem Oxethylierungsgrad von 30 verwendet. Unter sonst gleichen Redingungen wie im Vegleichsbeispiel 1 wurden folgende Werte gefunden:

| Anfangsviskosität | Endviskosität |
|---|---|
| 11400 mPa · s | >2000 mPa · s |

Beispiel 15

Abhängigkeit vom Kohletyp

Es wurde wie in Beispiel 14 verfahren, als Fließverbesserer wurden eingesetzt das Additiv aus Beispiel 14 b) und das Additiv aus Beispiel 14 f):

Mit dem Additiv aus Beispiel 14 b) wurden gefunden:

| | Anfanngsviskosität | Endviskosität |
|---|---|---|
| Kohle 1 | 1400 mPa · s | 480 mPa · s |
| Kohle 2 | 600 mPa · s | 440 mPa · s |
| Kohle 3 | 1200 mPa · s | 380 mPa · s |

Mit dem Additiv gemäß Beispiel 14 f) wurden gefunden:

| Anfangsviskosität | Endviskosität |
|---|---|
| Kohle 1 1800 mPa · s | 550 mPa · s |
| Kohle 2 2800 mPa · s | 1180 mPa · s |
| Kohle 3 1500 mPa · s | 390 mPa · s |

Beispiel 16

Einfluß des Kations

Es wurde wie in Beispiel 14 (Kohle 2) verfahren, jedoch wurden die Lösungen des Additivs aus Beispiel 5 mit verschiedenen Basen auf pH = 7,0 eingestellt

a) Additiv aus Beispiel 5, auf pH = 7 eingestellt mit KOH

| Anfangsviskosität | Endviskosität |
|---|---|
| 1200 mPa · s | 530 mPa · s |

b) Additiv aus Beispiel 5, auf pH = 7 eingestellt mit $NH_3$

| Anfangsviskosität | Endviskosität |
|---|---|
| 1100 mPa · s | 620 mPa · s |

c) Additiv aus Beispiel 5, auf pH = 7 eingestellt mit 1-Phenyl-1-aminobutan

| Anfangsviskosität | Endviskosität |
|---|---|
| 800 mPa · s | 520 mPa · s |

d) Additiv aus Beispiel 10, auf pH = 7 eingestellt mit KOH

| Anfangsviskosität | Endviskosität |
|---|---|
| 3200 mPa · s | 1310 mPa · s |

e) Additiv aus Beispiel 10, auf pH = 7 eingestellt mit 4-tert. Butylcyclohexylamin

| Anfangsviskosität | Endviskosität |
|---|---|
| 2300 mPa·s | 620 mPa·s |

f) Additiv aus Beispiel 10, auf pH = 7 eingestellt mit 1-Phenyl-1-aminoethan

| Anfangsviskosität | Endviskosität |
|---|---|
| 2300 mPa·s | 1010 mPa·s |

g) Additiv aus Beispiel 10, auf pH = 7 eingestellt mit 1-Phenyl-1-aminobutan

| Anfangsviskosität | Endviskosität |
|---|---|
| 1600 mPa·s | 760 mPa·s |

Beispiel 17

Einfluß der Additivkonzentration

Es wurde verfahren wie in Beispiel 14 beschrieben, mit der Ausnahme, daß die Additivkonzentration (bezogen auf trockenen Kohlenstaub) variiert wurde.
Mit dem Additiv gemäß Beispiel 5, das mit NaOH auf pH = 7,0 eingestellt wurde, wurden folgende Viskositatswerte gefunden

| Additivkonzentration (bezogen auf trockene Kohle 2) | Anfangsviskosität | Endviskosität |
|---|---|---|
| 0,3 Gew.-% | >20000 mPa·s | >2000 mPa·s |
| 0,4 Gew.-% | 1600 mPa·s | 1080 mPa·s |
| 0,5 Gew.-% | 600 mPa·s | 440 mPa·s |
| 0,6 Gew.-% | 700 mPa·s | 500 mPa·s |
| 0,7 Gew.-% | 1000 mPa·s | 620 mPa·s |
| 1,0 Gew.-% | 2300 mPa·s | 1100 mPa·s |

Beispiel 18

Einfluß der Kohlekonzentration

Es wird verfahren wie in Beispiel 14 beschrieben, mit der Ausnahme, daß die Konzentration an Kohlestaub (bezogen auf trockene Kohle 2) variiert wird.
Bezogen auf den Kohlegehalt der hergestellten Kohleaufschlämmungen wird die Konzentration des Entschäumers und des Additivs (Additiv gemäß Beispiel 14 b) mit 0,043 Gew.-% bzw. 0,5 Gew.-% konstant gehalten. Es werden folgende Viskositätswerte gefunden:

| Feststoffgehalt | Anfangsviskosität | Endviskosität |
|---|---|---|
| 65% | 600 mPa·s | 440 mPa·s |
| 68% | 1600 mPa·s | 770 mPa·s |
| 70% | 1800 mPa·s | 940 mPa·s |
| 71% | 3200 mPa·s | 1240 mPa·s |
| 72% | 4800 mPa·s | >2000 mPa·s |

Beispiel 19

Einfluß der Länge der Polyalkylenglykoletherkette

Variiert man z. B. in einem Teilester des Trimellithsäureanhydrids gemäß Beispiel 5 die Länge der Polyalkylenglykoletherkette des Grundkörpers (Beispiel 1) so erhält man an wäßrigen Kohleaufschlämmungen mit 65 Gew.-% Kohlestaub (Kohle 2, wasserfrei) 0,5 Gew.-% des jeweiligen Additivs (bezogen auf trockenen Kohlestaub 2) und 0,043 Gew.-% Entschäumer (bezogen auf trockenen Kohlestaub 2) folgende Viskositätswerte:

| Kettenlänge n nach Formelbild 1 | Anfangsviskosität | Endviskosität |
|---|---|---|
| 30 | 5200 mPa · s | 1700 mPa · s |
| 50 | 1700 mPa · s | 920 mPa · s |
| 80 | 600 mPa · s | 440 mPa · s |
| 100 | 820 mPa · s | 650 mPa · s |
| 120 | 1200 mPa · s | 890 mPa · s |

Beispiel 20

Einfluß der Scherbeanspruchung

Wäßrige Kohleaufschlämmungen, die unter Verwendung der Kohle 2 hergestellt werden, neigen besonders stark zur Eindickung, wenn sie einer längeren Scherbeanspruchung unterworfen werden. Bei Verwendung der erfindungsgemäßen Additive bleiben auch nach längerer Scherzeit fließfähige Aufschlämmungen mit gegenüber dem Ausgangswert etwas erhöhter Viskosität erhalten. Um die Praxisbedingungen anzunähern, wurden die folgenden Versuche in einer Schlauchpumpe (Typ Delasco PMA 10) bei Strömungsgeschwindigkeiten von ca. 0,7 m/s durchgeführt. Um Verdunstungsverluste zu vermeiden, wurden die untersuchten wäßrigen Kohleaufschlämmungen im geschlossenen System ständig im Kreis durch die Schlauchpumpe geführt.

a) Bei Verwendung einer wäßrigen Kohleaufschlämmung mit 65 Gew.% (bezogen auf trockenen Kohlestaub) der Kohle 2, 1 Gew.-% (bezogen auf trockenen Kohlestaub) Additiv gemäß Beispiel 5 (auf pH = 7,0 eingestellt mit NaOH), und der üblichen Menge Entschäumer wurden folgende Ergebnisse erhalten:
Viskositätswerte zu Beginn des Versuches:

| Anfangsviskosität | Endviskosität |
|---|---|
| 2300 mPa · s | 1100 mPa · s |

Nach 7 h Durchlaufzeit hatte sich die Viskosität konstant eingestellt auf

| Anfangsviskosität | Endviskosität |
|---|---|
| 3600 mPa · s | 1250 mPa · s |

Nach 36 h wurde der Versuch abgebrochen, da sich die Viskositätswerte nicht änderten.
Nach Beendigung dieses Versuches war das Wiederanfahren der Pumpe nach einer fünfstündigen Pause ohne Schwierigkeiten möglich.

b) Es wurde so verfahren wie in Beispiel 20 a) mit dem Unterschied, daß 1 Gew.-% des Additivs nach Beispiel 10 (auf pH = 7,0 gestellt in wäßriger Lösung mit NaOH) eingesetzt wurden.
Viskositätswerte zu Beginn des Versuches:

| Anfangsviskosität | Endviskosität |
|---|---|
| 2500 mPa · s | 1430 mPa · s |

Nach 7 h Durchlaufzeit hatte sich die Viskosität konstant eingestellt auf

| Anfangsviskosität | Endviskosität |
|---|---|
| 4000 mPa · s | 1600 mPa · s |

Der Versuch wurde nach 36 h abgebrochen, da sich die Viskositätswerte nicht änderten.
Nach Beendigung dieses Versuchs war das Wiederanfahren der Pumpe nach einer fünfstündigen Pause ohne Schwierigkeiten möglich.

Vergleichsbeispiel 4

Es wurde so verfahren wie in Beispiel 20 a) und 20 b) mit dem Unterschied, daß als Additiv 1 Gew.-% der Verbindung gemäß DE-OS 32 40 309-A 1 (dort zitiertes Beispiel 6) eingesetzt wurde.
Viskositätswerte bei Beginn des Versuches:

| Anfangsviskosität | Endviskosität |
|---|---|
| 6000 mPa · s | 1650 mPa · s |

Nach 90 Minuten mußte der Versuch abgebrochen werden, da wegen der Eindickung des Materials eine weitere Förderung mittels der verwendeten Pumpe unmöglich war. Gleiche Erscheinungen wurden innerhalb von 30 - 120 Minuten beobachtet, wenn man die Additivkonzentration zwischen 0,5 - 1,5 Gew.-% (bezogen auf trocken Kohlestaub 2) des Additivs aus Beispiel 6 der DE-OS 32 40 309 A 1 variierte bzw. z. B. als Additiv eine Verbindung gemäß Beispiel 3 der DE 32 40 309-A 1 in verschiedenen Konzentrationen einsetzte.

Beispiel 21

Es wurde verfahren wie in Beispiel 14 b), mit der Ausnahme, daß ein Teil des Wassers durch Methanol ersetzt wurde.
Es wurden folgende Werte erhalten:

| Verhältnis Wasser/ Methanol | Anfangsviskosität | Endviskosität |
|---|---|---|
| 100/0 | 600 mPa · s | 440 mPa · s |
| 85/15 | 560 mPa · s | 400 mPa · s |
| 70/30 | 590 mPa · s | 420 mPa · s |

**Patentansprüche**

1. Verwendung von (Teil-)estern aromatischer, cycloaliphatischer oder aliphatischer Polycarbonsäuren mit substituierten Phenolpolyglykolethern der Formel

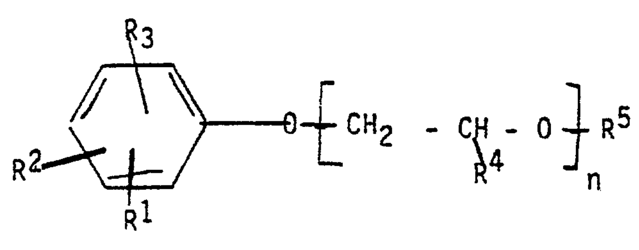

in welcher
$R^1$, $R^2$ und $R^3$ gleich oder verschieden sind und Wasserstoff, geradkettige oder verzweigte Alkylreste mit 1 bis 18 Kohlenstoffatomen im Alkylrest, (Alkyl)-phenylsubstituierte Alkylreste mit 1 bis 10 Kohlenstoffatomen in beiden Alkylresten oder eine (Alkyl)-, Phenyl-, Naphthyl- oder -Anthracylgruppe mit 1 bis 18 Kohlenstoffatomen in der ggf. verzweigten Alkylgruppe bedeuten,
n für einen Zahlenwert von 30 bis 400 steht,
$R^4$ Wasserstoff, ein Methyl-, Ethyl- oder Propylrest sein kann,
$R^5$ einen Rest der Form

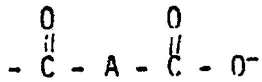 bedeutet, worin

—A—für 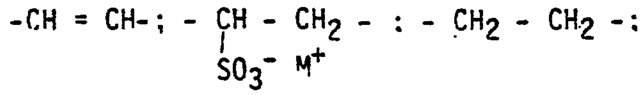

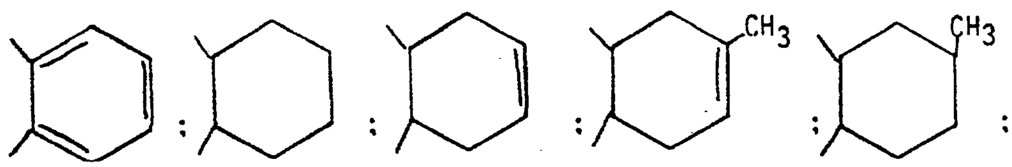

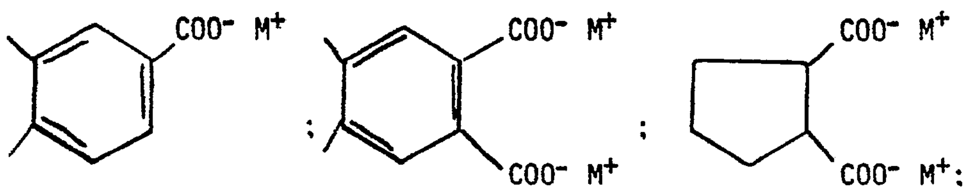

in denen $M^+$ für ein Wasserstoffion, ein Metallion oder ein Ammoniumion oder auch ein Kation der Art $HN^+H_2$-$R^6$ steht, worin $R^6$ einen gegebenenfalls substituierten Alkylrest mit 1 - 12 C-Atomen, einen Cycloalkylrest oder einen Phenylrest bedeutet, als Viskositätserniedriger in wäßrigen Kohleaufschlämmungen.

2. Verwendung nach Anspruch 1,
dadurch gekennzeichnet,
daß die erfindungsgemäß zu verwendenen Teilester in einer Menge von 0,1 - 3,0 Gew.-% bezogen auf den Gehalt an wasserfreier Kohle in der wäßrigen Kohleaufschlämmung anwesend sind.

3. Verwendung nach den Ansprüchen 1 und 2,
dadurch gekennzeichnet,
daß die wäßrige Kohle-Aufschlämmung 30 - 85 Gew.-% Kohle sowie gegebenenfalls noch weitere Hilfsstoffe wie Entschäumer und Stabilisator enthält.

4. Wäßrige Kohleaufschlämmung, enthaltend mindestens einen Teilester

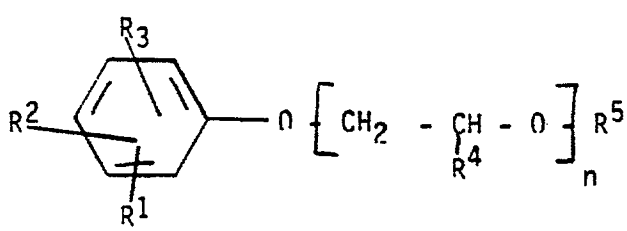

in welcher
$R^1$, $R^2$ und $R^3$ gleich oder verschieden sind und Wasserstoff, geradkettige oder verzweigte Alkylreste mit 1 bis 18 Kohlenstoffatomen im Alkylrest, (Alkyl)-phenylsubstituierte Alkylreste mit 1 bis 10 Kohlenstoffatomen in beiden Alkylresten oder eine (Alkyl)-, Phenyl-, Naphthyl- oder -Anthracylgruppe mit 1 bis 18 Kohlenstoffatomen in der ggf, verzweigten Alkylgruppe bedeuten,
n für einen Zahlenwert von 30 bis 400 steht,
$R^4$ Wasserstoff, einen Methyl-, Ethyl- oder Propylrest sein kann,
$R^5$ einen Rest der Form

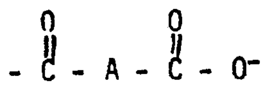 bedeutet, worin

-A- für $-CH = CH-$; 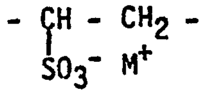 ; $-CH_2-CH_2-$;

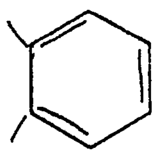 ; 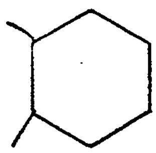 ; 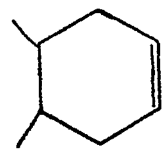 ; 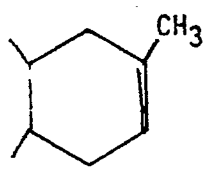 ; 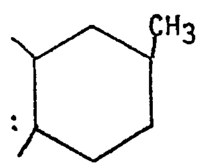 ;

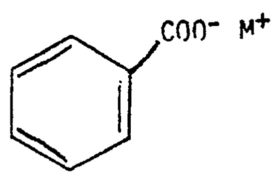 ; 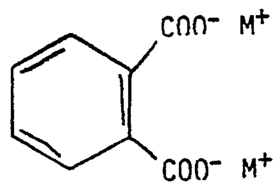 ; 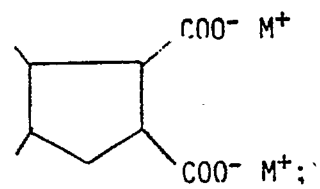 ;

in denen $M^+$ für ein Wasserstoffion, ein Metallion oder ein Ammoniumion oder auch ein Kation der Art $HN^+H_2-R^6$ steht, worin $R^6$ einen gegebenenfalls substituierten Alkylrest mit 1 - 12 C-Atomen, einen Cycloalkylrest oder einen Phenylrest bedeutet, als Viskositätserniedriger.

## Claims

1. Use of a (partial) ester of an aromatic, cycloaliphatic or aliphatic polycarboxylic acid with a substituted phenol polyglycol ether of the formula

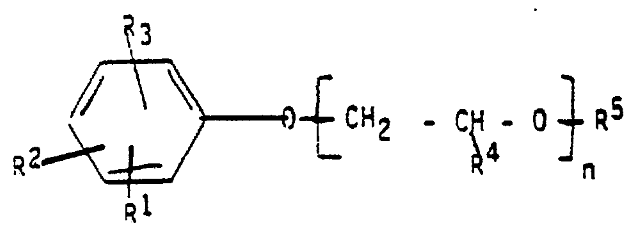

wherein $R^1$, $R^2$ and $R^3$ are identical or different and denote hydrogen, straight-chain or branchend alkyl radicals having 1 to 18 carbon atoms in the alkyl radical, (alkyl)-phenyl-substituted alkyl radicals having 1 to 10 carbon atoms in both alkyl radicals or an (alkyl)-phenyl, -naphthyl or -anthracyl group having 1 to 18 carbon atoms in the alkyl group which may be branched, n represents a numerical value from 30 to 400, $R^4$ can be hydrogen, a methyl radical, an ethyl radical or a propyl radical, $R^5$ denotes a radical of the formula

$-\overset{\overset{O}{\|}}{C}-A-\overset{\overset{O}{\|}}{C}-O^- M^+$, in which

-A- represents $-CH=CH-$, $-\underset{\underset{SO_3^-\ M^+}{|}}{CH}-CH_2-$, $-CH_2-CH_2-$

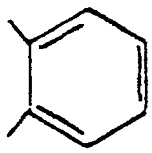 ; 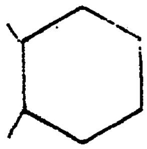 ; 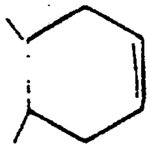 ; 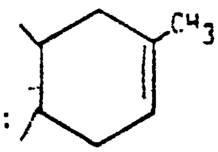 ; 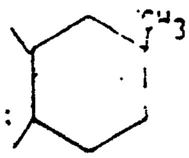 ;

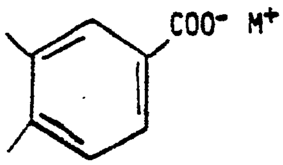 ; 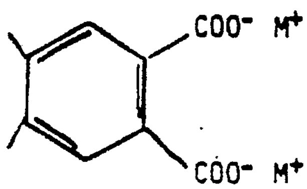 ; 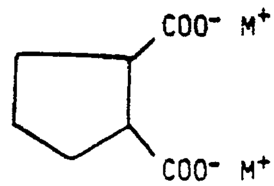 :

in which M+ represents a hydrogen ion, a metal ion or an ammonium ion or also a cation of the type $HN^+H_2-R^6$, wherein $R^6$ denotes an optionally substituted alkyl radical having 1–12 C atoms, a cycloalkyl radical or a phenyl radical, as a viscosity depressant in aqueous coal suspensions.

2. Use according to claim 1, characterized in that the partial esters to be used according to the invention are present in a quantity of 0.1–3.0% by weight, relative to the dry coal content in the aqueous coal suspension.

3. Use according to claim 1 or 2, characterized in that the aqueous coal suspension contains 30–85% by weight of coal and also, if desired, yet further auxiliaries such as an antifoam and a stabilizer.

4. Aqueous coal suspension, containing at least one partial ester

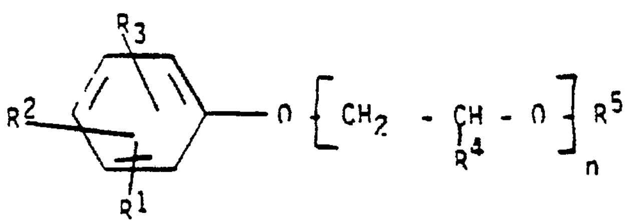

wherein $R^1$, $R^2$ and $R^3$ are identical or different and denote hydrogen, straight-chain or branched alkyl radicals having 1 to 18 carbon atoms in the alkyl radical, (alkyl)-phenyl-substituted alkyl radicals having 1 to 10 carbon atoms in both alkyl radicals or an (alkyl)-phenyl, -naphthyl or -anthracyl group having 1 to 18 carbon atoms in the alkyl group which may be branched, n represents a numerical value from 30 to 400, $R^4$ can be hydrogen, a methyl radical, an ethyl radical or a propyl radical, $R^5$ denotes a radical of the formula

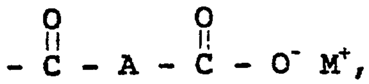 in which

-A- represents $-CH = CH-$, 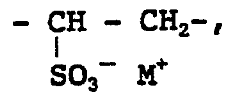, $-CH_2 - CH_2-$

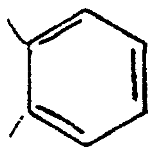 : 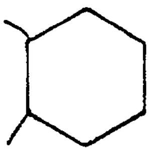 : 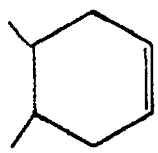 : 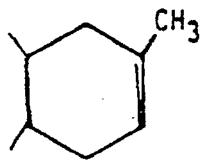 : 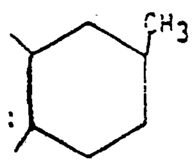 :

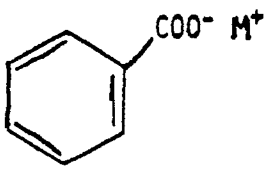 : 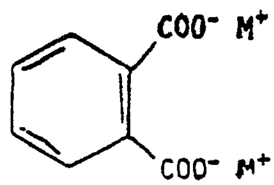 : 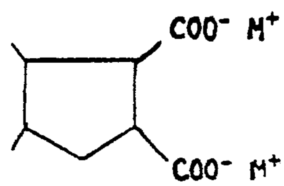 ;

in which $M^+$ represents a hydrogen ion, a metal ion or an ammonium ion or also a cation of the type $HN^+H_2-R^6$, wherein $R^6$ denotes an optionally substituted alkyl radical having 1–12 C atoms, a cycloalkyl radical or a phenyl radical, as a viscosity depressant.

**Revendications**

1. L'utilisation, en tant qu'agents d'abaissement de la viscosité dans des émulsions aqueuses de charbon, d'esters (partiels) d'acides polycarboxyliques aromatiques, cyclo-aliphatiques ou aliphatiques avec des éthers substitués de polyglycol, de formule

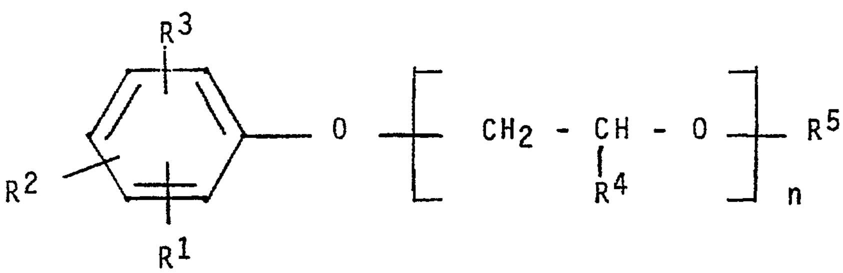

dans laquelle $R^1$, $R^2$ et $R^3$ sont identiques ou différents et représentent de l'hydrogène, des radicaux alkyle linéaires ou ramifiés comportant de 1 à 18 atomes de carbone dans le radical alkyle, des radicaux alkyle substitués par un groupe (alkyl)-phényle et comportante de 1 à 10 atomes de carbone dans les deux radicaux alkyle ou un groupe (alkyl)-phényle, naphthyle ou anthracyle comportant de 1 à 18 atomes de carbone dans le groupe alkyle éventuellement ramifié, n est un nombre d'une valeur de 30 à 400, $R^4$ représente de l'hydrogène, des radicaux méthyle, éthyle ou propyle, $R^5$ représente un radical de formule

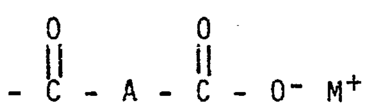 ,

dans laquelle –A– représente:

$-CH = CH-$, 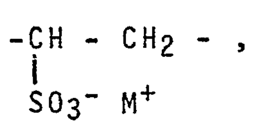 , $-CH_2 - CH_2 -$

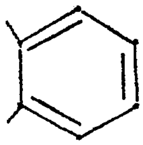
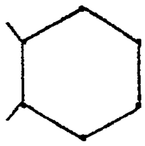
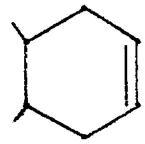
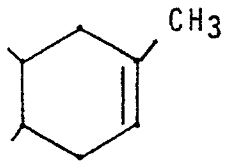
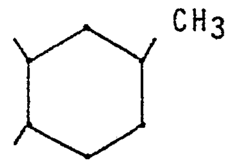

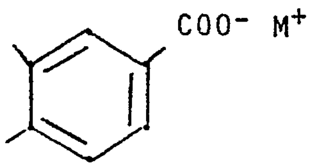
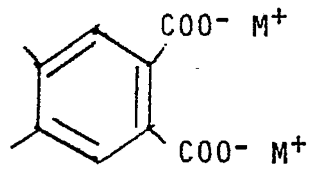
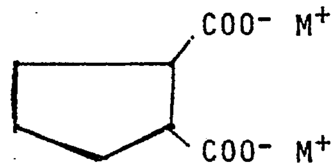

où $M^+$ représente un atome d'hydrogène, un ion métallique ou un ion ammoniun ou également un cation du type

$HN^+H^2–R^6$,

dans lequel $R^6$ représente un reste alkyle éventuellement substitué qui comporte de 1 à 12 atomes de carbone, un radical cyclo-alkyle ou un radical phényle.

2. L'utilisation selon la revendication 1, caractérisée par le fait que les esters à utiliser conformément à l'invention sont présents, dans la suspension aqueuse de charbon, dans une quantité de 0,1 à 3,0% en poids, relativement à la teneur en charbon anhydre dans la suspension aqueuse de charbon.

3. L'utilisation selon les revendications 1 et 2, caractérisée par le fait que la suspension aqueuse de charbon renferme de 30 à 85% en poids de charbon, ainsi que, le cas échéant, encore d'autres substances auxiliaires telles qu'un agent brise-mousse et un stabilisant.

4. Une dispersion aqueuse de charbon, en tant qu'agents d'abaissement de la viscosité, renfermant au moins un ester partiel de formule

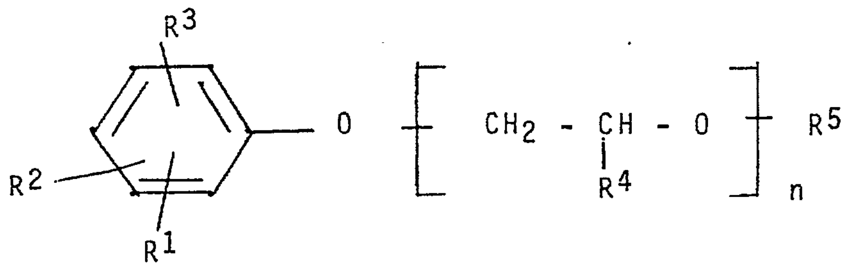 ,

dans laquelle $R^1$, $R^2$ et $R^3$ sont identiques ou différents et représentent de l'hydrogène, des radicaux alkyle linéaires ou ramifiés comportant de 1 à 18 atomes de carbone dans le radical alkyle, des radicaux alkyle substitués par un groupe (alkyl)-phényle et comportant de 1 à 10 atomes de carbone dans les deux radicaux alkyle ou un groupe (alkyl)-phényle, naphthyle ou anthracyle comportant de 1 à 18 atomes de carbone dans le groupe alkyle éventuellement ramifié, n est un nombre d'une valeur de 30 à 400, $R^4$ représente de l'hydrogène, des radicaux méthyle, éthyle ou propyle, $R^5$ représente un radical de formule

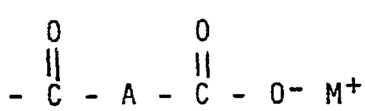 ,

dans laquelle – A – représente:

$-CH = CH-$,

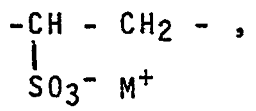

$-CH_2 - CH_2 -$

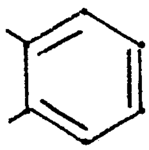
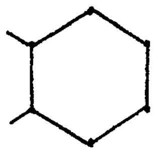
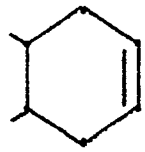
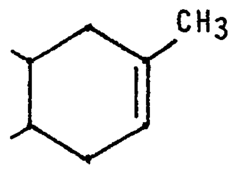
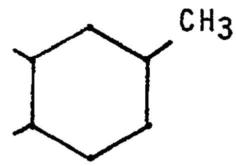

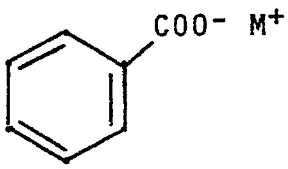
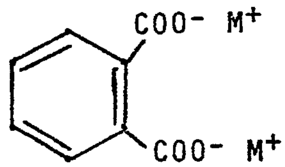
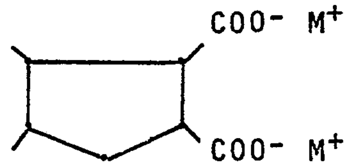

où $M^+$ représente un atome d'hydrogène, un ion métallique ou un ion ammonium ou également un cation du type

$HN^+H_2–R^6$,

dans lequel $R^6$ représente un radical reste alkyle éventuellement substitué qui comporte de 1à 12 atomes de carbone, un radical cyclo-alkyle ou un radical phényle.